(19) **Europäisches Patentamt / European Patent Office / Office européen des brevets**

(11) **EP 4 645 474 A1**

(12) # EUROPEAN PATENT APPLICATION
published in accordance with Art. 153(4) EPC

(43) Date of publication:
**05.11.2025 Bulletin 2025/45**

(21) Application number: **23912285.6**

(22) Date of filing: **27.12.2023**

(51) International Patent Classification (IPC):
**H01M 4/62** *(2006.01)* **H01M 4/13** *(2010.01)*

(52) Cooperative Patent Classification (CPC):
**H01M 4/13; H01M 4/62;** Y02E 60/10

(86) International application number:
**PCT/JP2023/047108**

(87) International publication number:
**WO 2024/143508 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022211922**

(71) Applicant: **Kuraray Co., Ltd.
Kurashiki-shi, Okayama 710-0801 (JP)**

(72) Inventors:
• **MITSUMORI, Haruna**
  **Okayama-shi, Okayama 702-8601 (JP)**
• **TACHIKAWA, Kengo**
  **Kurashiki-shi, Okayama 710-0801 (JP)**
• **WATANABE, Shunichiro**
  **Okayama-shi, Okayama 702-8601 (JP)**
• **HORIKOSHI, Takafumi**
  **Okayama-shi, Okayama 702-8601 (JP)**

(74) Representative: **Müller-Boré & Partner
Patentanwälte PartG mbB
Friedenheimer Brücke 21
80639 München (DE)**

(54) **COMPOSITION FOR NONAQUEOUS ELECTROLYTE BATTERY ELECTRODES AND ADDITIVE FOR NONAQUEOUS ELECTROLYTE BATTERY ELECTRODES**

(57) An object of the present invention to provide a composition for nonaqueous electrolyte battery electrodes capable of achieving both good coatability of the composition and the suppression of expansion of electrodes obtained from the composition and an additive for nonaqueous electrolyte battery electrodes. The present invention relates to a composition for nonaqueous electrolyte battery electrodes comprising a binder; and an organic fiber, wherein the organic fiber has a specific gravity of 1.00 or more and a fiber length of 0.1 mm or more and 10 mm or less.

EP 4 645 474 A1

**Description**

TECHNICAL FIELD

This application claims benefit of priority under the Paris Convention to Japanese Patent Application 2022-211922, filed December 28, 2022, the entire content of which is incorporated herein by reference.

The present invention relates to a composition for nonaqueous electrolyte battery electrodes and an additive for nonaqueous electrolyte battery electrodes.

BACKGROUND ART

In recent years, mobile terminals, such as mobile phones, laptop computers, and pad-type information terminal devices, have become increasingly popular. As the mobile terminals have been demanded to be more comfortable to carry and are rapidly becoming smaller, thinner, lighter, and higher in performance, batteries used in the mobile terminals also have been required to be smaller, thinner, lighter, and higher in performance. As a nonaqueous electrolyte secondary battery used for power supplies of such mobile terminals, a lithium-ion secondary battery has been used in many cases.

The lithium-ion secondary battery is known that lithium-ion insertion/desorption occurs in voids of active materials in charging and discharging, resulting in expansion and contraction of the active materials. The expansion and contraction of the active material cause the separation of a pole material from a current collector and the formation of voids between the active materials, resulting in reduced conductivity, for example, which is considered to be one of the reasons for a decrease in battery performance.

To address such expansion and contraction, in Patent Document 1, for example, the expansion of an anode has been suppressed by adding a filler comprising less conductive ceramics or cellulose and having a specific shape to the anode.

In Patent Document 2, the expansion of an anode active material is controlled by coating the anode active material with a composite binder containing lignin sulphonate and cellulose nanofibers.

PRIOR ART DOCUMENTS

PATENT DOCUMENTS

Patent Document 1: JP-A-2019-186164
Patent Document 2: JP-A-2020-129479

SUMMARY OF THE INVENTION

PROBLEMS TO BE SOLVED BY THE INVENTION

However, the ceramic filler described in Patent Document 1 is relatively brittle and has a possibility of being broken in mixing and coating, and the expansion suppression effect has not always been satisfactory. Further, the ceramic filler has had a possibility that fine fibers generated by the breakage cause poor coating of a composition for pole materials. Further, the cellulose filler is generally expensive, posing a problem of low versatility in terms of economy.

The composite binder described in Patent Document 2 also contains an expensive cellulose filler. Further, there has been a problem of the need for compounding with lignin sulphonate, which has increased the number of steps. In addition thereto, the expansion suppression effect has also not always been sufficient.

Thus, it is an object of the present invention to provide a composition for nonaqueous electrolyte battery electrodes capable of achieving both good coatability of the composition and the suppression of expansion of electrodes obtained from the composition and an additive for nonaqueous electrolyte battery electrodes.

SOLUTIONS TO THE PROBLEMS

The present inventors have conducted detailed examinations to solve the above-described problems. As a result, the present inventors have found that the above-described problems can be solved by a composition for nonaqueous electrolyte battery electrodes containing specific organic fibers, and thus have accomplished the present invention. More specifically, the present invention encompasses the following suitable aspects.

[1] A composition for nonaqueous electrolyte battery electrodes containing: a binder and an organic fiber, in which the organic fiber has a specific gravity of 1.00 or more and a fiber length of 0.1 mm or more and 10 mm or less.

[2] The composition according to [1], in which the organic fiber has an SP value of 10 $(cal/cm^3)^{1/2}$ or more and 16 $(cal/cm^3)^{1/2}$ or less.

[3] The composition according to [1] or [2], in which the organic fiber has a fiber diameter of 1 $\mu$m or more and 30 $\mu$m or less.

[4] The composition according to any one of [1] to [3], in which the organic fiber comprises at least one selected from the group consisting of a polyvinyl alcohol-based fiber, a polyester-based fiber, an ethylene-vinyl alcohol-based copolymer fiber, a polyamide-based fiber, and a polyimide-based fiber.

[5] The composition according to any one of [1] to [4], in which the binder comprises at least one selected from the group consisting of a synthetic resin-based binder, a natural resin-based binder, a semisynthetic resin-based binder, a silicate-based binder, a phosphate-based binder, a sol-based binder, and a cement-based binder.

[6] The composition according to any one of [1] to [5] further containing: an active material.

[7] The composition according to [6], in which the content of the organic fiber is 0.01 parts by mass or more and 10 parts by mass or less based on 100 parts by mass of the active material.

[8] An additive for nonaqueous electrolyte battery electrodes containing: an organic fiber, in which the organic fiber has a specific gravity of 1.00 or more and a fiber length of 0.1 mm or more and 10 mm or less.

[9] The additive according to [8], in which the organic fiber has an SP value of 10 $(cal/cm^3)^{1/2}$ or more and 16 $(cal/cm^3)^{1/2}$ or less.

[10] The additive according to [8] or [9], in which the organic fiber has a fiber diameter of 1 $\mu$m or more and 30 $\mu$m or less.

EFFECTS OF THE INVENTION

The present invention can provide a composition for nonaqueous electrolyte battery electrodes capable of achieving both good coatability of the composition and the suppression of expansion of electrodes obtained from the composition and an additive for nonaqueous electrolyte battery electrodes.

DETAILED DESCRIPTION

Hereinafter, embodiments of the present invention are described in detail. The following description is a description giving examples of the embodiments of the present invention and is not intended to limit the present invention to the following embodiments.

<Composition for Nonaqueous Electrolyte Battery Electrodes>

A composition for nonaqueous electrolyte battery electrodes of the present invention (hereafter also simply referred to as "composition for electrodes") contains a binder and organic fibers, in which the organic fibers have a specific gravity of 1.00 or more and a fiber length of 0.1 mm or more and 10 mm or less.

In this specification, examples of the nonaqueous electrolyte battery include a lithium-ion secondary battery, an all-solid-state battery, a polymer lithium-ion battery, a lithium sulfur battery, a sodium-ion battery, a calcium-ion battery, an air battery, and the like.

The mechanism by which the composition for electrodes of the present invention can achieve both good coatability and the suppression of expansion of electrodes obtained from the composition is not clarified, but is estimated as follows. The addition of specific organic fibers to the composition for electrodes results in uniform dispersion not causing localization, breakage, and the like in the composition, and serves to bind active materials to each other for reinforcement. Thus, it is considered that, even when the insertion/desorption of lithium ions into/from voids of the active materials occurs by charging and discharging and the active materials expand/contract, the shapes of the active materials can be maintained, so that both good coatability and the expansion suppression can be achieved. To cause the composition for electrodes of the present invention to exhibit a sufficient reinforcing effect, the organic fibers have been usually required to be added in large amounts into the composition. However, the organic fibers themselves do not contribute to a reaction of a battery, and therefore a large amount of members unnecessary for battery performance are present inside the battery, which has not been preferable in terms of improving the battery performance. However, the present inventors have found that, when the fiber length and the specific gravity of the organic fibers are adjusted in appropriate ranges, both good coatability and the expansion suppression can be achieved without adding the organic fibers in large amounts. Thus, the present invention also encompasses an additive for nonaqueous electrolyte battery electrodes containing organic fibers.

Further, the composition for electrodes of the present invention can improve the electrolyte solution permeability of electrodes obtained from the composition for electrodes of the present invention, because the organic fibers of the composition for electrodes of the present invention are uniformly dispersed and present in the electrode, forming a liquid passage for an electrolyte solution. Thus, the resistance of batteries containing electrodes obtained from the composition for electrodes of the present invention is likely to decrease, and the battery capacity is likely to be larger.

Further, in one preferable embodiment of the present invention, hydrophilic fibers are likely to absorb an electrolyte solution, and therefore the electrolyte solution absorbency of electrodes obtained from the composition for electrodes of the present invention can also be improved. This allows cations, such as lithium ions, to move more easily in a battery containing electrodes obtained from the composition for electrodes of the present invention, and therefore, the battery capacity can be increased. A faster liquid absorption rate also makes it easier to improve step passability in manufacturing batteries.

[Organic Fibers]

The organic fibers contained in the composition for nonaqueous electrolyte battery electrodes of the present invention have a specific gravity of 1.00 or more. When the organic fibers have a specific gravity of 1.00 or more, the coatability of the composition for electrodes is improved, and the expansion of electrodes obtained from the composition for electrodes can be suppressed. When the organic fibers have a specific gravity of less than 1.00, the distribution of the organic fibers is uneven in the composition for electrodes, making it difficult to obtain a homogeneous composition. Therefore, the stability of the composition deteriorates, and the coatability is likely to deteriorate. Further, the performance of the electrodes to be obtained is likely to decline. The specific gravity of the organic fibers is preferably 1.10 or more, more preferably 1.20 or more, still more preferably 1.25 or more, and even still more preferably 1.30 or more. When the specific gravity of the organic fibers is equal to or more than the lower limit above, the coatability of the composition for electrodes is further improved and the expansion of electrodes obtained from the composition for electrodes can be further suppressed. The upper limit of the specific gravity of the organic fibers is not particularly limited insofar as the organic fibers can be uniformly dispersed in the composition for electrodes, and is usually 3.0 or less and preferably 2.0 or less, and 1.5 or less is also one preferable embodiment. Thus, the specific gravity of the organic fibers is 1.00 to 3.0, preferably 1.10 to 3.0, more preferably 1.20 to 2.0, and still more preferably 1.25 to 2.0 or 1.30 to 1.5. The specific gravity of the organic fibers can be adjusted in the ranges above by adjusting the type and the like of resin contained in the organic fibers as appropriate. The specific gravity can be determined, for example, by the method described in Examples described later.

The above-described organic fibers have a fiber length of 0.1 mm or more and 10 mm or less. When the fiber length is 0.1 mm or more and 10 mm or less, the coatability of the composition for electrodes is improved, and the expansion of electrodes obtained from the composition for electrodes can be suppressed. When the fiber length is less than 0.1 mm, the reinforcing effect of a pole material by the organic fibers is difficult to obtain, and therefore electrodes are likely to expand. This causes the pole material to peel off from a current collection plate, making the battery performance more likely to deteriorate. On the other hand, when the fiber length exceeds 10 mm, the organic fibers tend to become entangled in the composition for electrodes, resulting in the generation of a fiber mass, and the stability and the coatability of the composition tend to be poor. The fiber length is preferably 0.5 mm or more, more preferably 0.7 mm or more, still more preferably 1 mm or more, even still more preferably 1.5 mm or more, and particularly preferably 2 mm or more or 3 mm or more, and is preferably 9 mm or less, more preferably 8 mm or less, still more preferably 7 mm or less, and particularly preferably 5 mm or less. Thus, the fiber length of the organic fibers is 0.1 to 10 mm, preferably 0.5 to 9 mm, more preferably 0.7 to 8 mm, still more preferably 1 to 7 mm, and particularly 1.5 to 7 mm, 2 to 7 mm, 3 to 7 mm, 3 to 5 mm, 0.5 to 10 mm, 1 to 8 mm, or 1.5 to 5 mm. When the fiber length is equal to or more than the lower limit and equal to or lower than the upper limit, the coatability of the composition for electrodes is further improved and the expansion of electrodes obtained from the composition for electrodes can be further suppressed. The fiber length can be adjusted in the ranges above by changing the spinning conditions (e.g., spinning temperature, spinning speed, and the like) as appropriate, cutting the fibers, or the like. The fiber length can be determined, for example, by the method described in Examples described later.

The SP value of the organic fibers is preferably 10 $(cal/cm^3)^{1/2}$ or more, more preferably 10.5 $(cal/cm^3)^{1/2}$ or more, still more preferably 10.8 $(cal/cm^3)^{1/2}$ or more, and even still more preferably 12.7 $(cal/cm^3)^{1/2}$ or more, and is preferably 16 $(cal/cm^3)^{1/2}$ or less, more preferably 15.5 $(cal/cm^3)^{1/2}$ or less, and still more preferably 15 $(cal/cm^3)^{1/2}$ or less. Therefore, the SP value of the organic fibers is preferably 10 to 16 $(cal/cm^3)^{1/2}$, preferably 10.5 to 15.5 $(cal/cm^3)^{1/2}$, and more preferably 10.8 to 15 $(cal/cm^3)^{1/2}$ or 12.7 to 15 $(cal/cm^3)^{1/2}$. When the SP value of the organic fibers is equal to or more than the lower limit and equal to or lower than the upper limit, the affinity between the organic fibers and the active materials is likely to be improved, making it easy to suppress the expansion of electrodes obtained from the composition for electrodes. Herein, the SP value in the present invention refers to the solubility parameter, which is a value specific to a substance. In this embodiment, values described in "Polymer Hand Book (4th) Edition, (1999), Wiley-Interscience" are used as the SP value. The SP value can be experimentally measured and can be estimated using empirical approximations based on the molecular structure. Examples of experimental measurement methods include a method of performing estimation from the latent heat of vaporization, a method of performing estimation from the surface tension, and a method of performing estimation from the refractive index. Examples of methods of performing estimation using empirical approximations based on the molecular structure include the Bicerano method, the Hildebrand method, the Small method, the Fedors method, the Van Krevelen method, the Hansen method, the Hoy method, the Ascadskii method, the Okitsu method, and the like. When the SP value of the organic fibers is not described in "Polymer Hand Book (4th) Edition, (1999), Wiley-Interscience", any of these methods may be used for calculation. The Fedors method is preferably used for calculation because it is simple and has proven usefulness. In that case, the unit of the SP value is $MPa^{1/2}$. The SP value can be converted using the following expression.

$$1 \ (cal/cm^3)^{1/2} = 2.046 \ MPa^{1/2}$$

When the organic fibers are composite fibers, such as a side-by-side structure, the SP value can be calculated by the volume fraction from the SP value of a polymer constituting the fibers according to the Hansen method.

The fiber diameter of the organic fibers is preferably 1 μm or more, more preferably 1.5 μm or more, still more preferably 2.5 μm or more, even still more preferably 4 μm or more, and particularly preferably 6 μm or more or 7 μm or more from the viewpoint of making it easy to obtain the reinforcing effect of the active material by the organic fibers and to suppress the expansion of electrodes. From the viewpoint of easily suppressing the generation of irregularities on the electrode surface caused by the organic fibers, which can be a cause of the deterioration of the battery performance, the fiber diameter of the organic fibers is preferably 30 μm or less, more preferably 25 μm or less, still more preferably 20 μm or less, even still more preferably 17 μm or less, and particularly 15 μm or less, 10 μm or less, or 8 μm or less. Thus, the fiber diameter of the organic fibers is preferably 1 to 30 μm, more preferably 1.5 to 25 μm, still more preferably 2.5 to 25 μm, even still more preferably 4 to 25 μm, and particularly preferably 4 to 20 μm, 6 to 20 μm, 7 to 17 μm, 7 to 15 μm, 7 to 10 μm, 7 to 8 μm, 1 to 20 μm, 1.5 to 15 μm, 2.5 to 10 μm, or 4 to 8 μm. The fiber diameter can be adjusted in the ranges above by appropriately changing the spinning conditions (e.g., spinning temperature, nozzle diameter, and the like) as appropriate. The fiber diameter can be determined, for example, by the method described in Examples described later.

The aspect ratio of the organic fibers [ratio of the fiber length to the fiber diameter (Fiber length/Fiber diameter)] is preferably 50 or more, more preferably 60 or more, still more preferably 100 or more, even still more preferably 150 or more, and particularly preferably 200 or more, 250 or more, 300 or more, 400 or more, or 500 or more, and is preferably 8000 or less, more preferably 3000 or less, still more preferably 2000 or less, even still more preferably 1500 or less, and particularly preferably 1300 or less, 1200 or less, 1000 or less, 950 or less, 800 or less, 700 or less, or 600 or less. Thus, the aspect ratio of the organic fibers is preferably 50 to 8000, more preferably 60 to 8000, more preferably 100 to 8000, still more preferably 150 to 3000, even still more preferably 150 to 2000, yet even still more preferably 200 to 1500, particularly preferably 250 to 1300, and particularly preferably 250 to 1200, 300 to 1000, 400 to 950, or 500 to 800, 500 to 700, 500 to 600, 50 to 2000, 100 to 1000, 200 to 700, or 300 to 600. When the aspect ratio of the organic fibers is equal to or more than the lower limit and equal to or lower than the upper limit, the coatability of the composition for electrodes is further improved, and the expansion of electrodes obtained from the composition for electrodes can be further suppressed.

The tensile strength of the organic fibers is preferably 2cN/dtex or more and more preferably 3cN/dtex or more. The upper limit of the tensile strength is not particularly limited, and is, for example, 50 cN/dtex or less. The elongation of the organic fibers is preferably 400% or less, more preferably 100% or less, and still more preferably 50% or less or 30% or less. The elongation of the organic fibers is usually 2% or more. Thus, the tensile strength of the organic fibers is preferably 2 to 50 cN/dtex and more preferably 3 to 50 cN/dtex, and the elongation is preferably 2 to 400%, more preferably 2 to 100%, and still more preferably 2 to 50% or 2 to 30%. When the tensile strength and the elongation of the organic fibers fall within the ranges above, the expansion of electrodes obtained from the composition for electrodes can be further suppressed. The tensile strength and the elongation of the organic fibers can be measured according to, for example, JIS L 1013:2021.

The cross-sectional shape of the above-described organic fibers is not particularly limited. The cross-sectional shape of the organic fibers may be a circular shape, for example, or may bean irregular shape, such as an oval shape, a triangular shape, a square shape, a rhombus shape, a star shape, a flat shape, or a snowman shape. A hollow shape may also be acceptable. The fiber diameter when the organic fibers have an irregular-shaped cross-section may be calculated in terms of a perfect circle.

The content ratio (fiber volume content ratio) of the organic fibers in the composition for electrodes of the present invention is preferably 0.005 to 10% by volume, more preferably 0.050 to 5% by volume, still more preferably 0.100 to 3% by volume, even still more preferably 0.150 to 1% by volume, and particularly preferably 0.250 to 1% by volume. When the fiber volume content ratio falls within the ranges above, the expansion of electrodes obtained from the composition for electrodes can be further suppressed. The above-described fiber volume content ratio can be determined from a value obtained by dividing the content (% by weight) of the organic fibers in the composition for electrodes by the specific gravity of the organic fibers [Content (% by weight) of organic fibers in the composition for electrodes/Specific gravity of organic fibers].

The above-described organic fibers may be any of synthetic fibers, semisynthetic fibers, regenerated fibers, or natural fibers. Examples of the synthetic fibers include, for example, polyolefin-based fibers, acrylic fibers, polyvinyl alcohol (hereinafter sometimes referred to as "PVA")-based fibers, ethylene-vinyl alcohol-based copolymer fibers, polyamide-based fibers, polyimide-based fibers, polyester-based fibers, and the like. Examples of the semisynthetic fibers include acetate fibers, triacetate fibers, and the like. Examples of the regenerated fibers include rayon, cuprammonium rayon, lyocell, polynosic, and the like. Examples of the natural fibers include cotton, wool, hemp, and the like. Among the above, due to the fact that both good coatability of the composition for electrodes and the suppression of expansion of electrodes obtained from the composition are easily achieved, the above-described organic fibers are preferably synthetic fibers, more preferably contain at least one selected from the group consisting of PVA-based fibers, polyester-based fibers, ethylene-vinyl alcohol-based copolymer fibers, polyamide-based fibers, and polyimide-based fibers, still more preferably contain at least one selected from the group consisting of PVA-based fibers, polyester-based fibers, and ethylene-vinyl alcohol-based copolymer fibers, even still more preferably contain at least one of PVA-based fibers or polyester-based fibers, and particularly preferably contain PVA-based fibers.

A polymer constituting PVA-based fibers is not particularly limited insofar as it has a vinyl alcohol unit as the main component, and may contain other constituent units (modified unit) as desired insofar as the advantageous effects of the present invention are not impaired. Examples of such modified units include α-olefins, such as propylene, 1-butene, isobutene, and 1-hexene; unsaturated acids, such as acrylic acid, methacrylic acid, crotonic acid, phthalic acid, phthalic anhydride, maleic acid, maleic anhydride, itaconic acid, and itaconic anhydride, and salts thereof or alkyl esters having 1 to 18 carbon atoms thereof; acrylamides, such as acrylamide, N-alkylacrylamide having 1 to 18 carbon atoms, N,N-dimethylacrylamide, 2-acrylamidopropanesulfonic acid and a salt thereof, and acrylamidopropyldimethylamine and an acid salt thereof or a quaternary salt thereof; methacrylamides, such as methacrylamide, N-alkylmethacrylamides having 1 to 18 carbon atoms, N,N-dimethylmethacrylamide, 2-methacrylamidopropanesulfonic acid and a salt thereof, and methacrylamidepropyldimethylamine and a salt thereof or a quaternary salt thereof; N-vinyl amides, such as N-vinylpyrrolidone, N-vinylformamide, and N-vinylacetamide; vinyl cyanides, such as acrylonitrile and methacrylonitrile; vinyl ethers, such as methyl vinyl ether, ethyl vinyl ether, n-propyl vinyl ether, i-propyl vinyl ether, and n-butyl vinyl ether; allyl acetate; allyl ethers, such as propyl allyl ether, butyl allyl ether, and hexyl allyl ether; vinyl halides, such as vinyl chloride, vinyl fluoride, and vinyl bromide; vinylidene halides, such as vinylidene chloride and vinylidene fluoride; vinyl silanes, such as trimethoxyvinylsilane; compounds having oxyalkylene groups, such as polyoxyalkylene allyl ether; isopropenyl acetate; α-olefins containing hydroxy groups, such as 3-buten-1-ol, 4-penten-1-ol, 5-hexen-1-ol, 7-octen-1-ol, 9-decen-1-ol, and 3-methyl-3-buten-1-ol; compounds having carboxyl groups derived from fumaric acid, maleic acid, itaconic acid, maleic anhydride, phthalic anhydride, trimellitic anhydride, and the like; monomers having sulfonic acid groups derived from ethylene sulfonic acid, allyl sulfonic acid, methallyl sulfonic acid, 2-acrylamide-2-methylpropanesulfonic acid, and the like; compounds having cationic groups derived from vinyloxyethyl trimethyl ammonium chloride, vinyloxybutyl trimethyl ammonium chloride, vinyloxyethyl dimethylamine, vinyloxymethyl diethylamine, N-acrylamidomethyl trimethyl ammonium chloride, N-acrylamidoethyl trimethyl ammonium chloride, N-acrylamidodimethylamine, allyl trimethyl ammonium chloride, methallyl trimethyl ammonium chloride, dimethylallylamine, and allylmethylamine; and the like. These modified units may be used alone or in combination of two or more thereof. A method of introducing such modified units may be a copolymerization method or a post-reaction method.

The molar ratio of the modified unit to the vinyl alcohol unit [(Vinyl alcohol unit)/(Modified unit)] is, for example, 85/15 to 100/0, preferably 88/12 to 100/0, and more preferably 90/10 to 100/0. The molar ratio of the modified unit can be determined, for example, by solid-state $^{13}$C-NMR (nuclear magnetic resonance spectroscopy).

The number average molecular weight of a PVA-based polymer is not particularly limited, and, from the viewpoint of handling properties of fibers to be obtained, is preferably 20,000 or more and more preferably 70,000 or more, and preferably 250,000 or less and more preferably 200,000 or less. Thus, the number average molecular weight of the PVA-based polymer is preferably 20,000 to 250,000 and more preferably 70,000 to 200,000. The number average molecular weight can be determined, for example, by gel permeation chromatography (GPC) using polymethyl methacrylate as a standard substance.

The viscosity-average degree of polymerization of the PVA-based polymer is not particularly limited, and, from the viewpoint of handling properties of fibers to be obtained, is preferably 500 or more and more preferably 1,700 or more, and preferably 5,000 or less and more preferably 4,000 or less. Thus, the viscosity-average degree of polymerization of the PVA-based polymer is preferably 500 to 5,000 and more preferably 1,700 to 4,000. The viscosity-average degree of polymerization can be measured, for example, based on JIS K 6726:1994 "Testing Methods for Polyvinyl Alcohol". Specifically, when the saponification degree is less than 99.5% by mol, the viscosity-average degree of polymerization can be determined from the intrinsic viscosity [η] (liter/g) measured at 30°C in water using the following expression for PVA saponified until the saponification degree reaches 99.5% by mol or more.

$$\text{Viscosity-average degree of polymerization} = ([\eta] \times 10^4/8.29)^{(1/0.62)}$$

The saponification degree of the PVA-based polymer can also be selected as appropriate according to the purpose and is not particularly limited. From the viewpoint of handling properties and the like of fibers to be obtained, the saponification degree is, for example, 88% by mol or more, preferably 90% by mol or more, and more preferably 95% by mol or more. The upper limit of the saponification degree is 100% by mol or less. Thus, the saponification degree of the PVA-based polymer is, for example, 88 to 100% by mol, preferably 90 to 100% by mol, and more preferably 95 to 100% by mol. The saponification degree can be determined, for example, according to JIS K 6726:1994.

The tensile strength of the PVA-based fibers is preferably 2 cN/dtex or more and more preferably 3 cN/dtex or more. The upper limit of the tensile strength is not particularly limited, and is, for example, 50 cN/dtex or less. The elongation is preferably 50% or less and more preferably 30% or less. The elongation is usually 2% or more. Thus, the tensile strength of the PVA-based fibers is preferably 2 to 50 cN/dtex and more preferably 3 to 50 cN/dtex, and the elongation is preferably 2 to 50% and more preferably 2 to 30%. When the tensile strength and the elongation of the PVA-based fibers fall within the ranges above, the expansion of electrodes obtained from the composition for electrodes can be further suppressed. The tensile strength and the elongation of the PVA-based fibers can be measured, for example, according to JIS L 1013:2021.

A PVA-based polymer constituting the PVA-based fibers may contain only one type of polymer, may contain two or more polymers different from each other in one or more of the type of the modified unit described above and the molar ratio thereof, the degree of polymerization, the saponification degree, and the like, or may contain a polymer other than the above-described PVA-based polymer. In addition thereto, composite spun fibers (e.g., core-sheath fibers) with other polymers and the like may be acceptable.

Examples of the polymer constituting the polyester-based fibers include polyethylene terephthalate (PET), polybutylene terephthalate (PBT), polyethylene naphthalate (PEN), polypropylene terephthalate (PPT), polylactic acid (PLA), and the like. Among the above, PET or PBT is preferable because both good coatability of the composition for electrodes and the suppression of expansion of electrodes obtained from the composition are easily achieved.

The above-described polyester-based polymer may be a modified polyester-based polymer modified with a monomer, such as isophthalic acid, insofar as the advantageous effects of the present invention are not impaired. The proportion of modified monomers in the modified polyester-based polymer is usually 0.1 to 30% by mol, preferably 0.5 to 20% by mol, and more preferably 1 to 15% by mol.

The number average molecular weight of the polyester-based polymer is not particularly limited, and, from the viewpoint of handling properties of fibers to be obtained, is usually 4,000 to 15,000 and preferably 6,000 to 10,000. The number average molecular weight of the polyester-based polymer can be determined by the same method as that for the number average molecular weight of the polyester PVA-based polymer.

The tensile strength of the polyester-based fibers is preferably 2 cN/dtex or more and more preferably 3 cN/dtex or more. The upper limit of the tensile strength is not particularly limited, and is, for example, 50 cN/dtex or less. The elongation is preferably 400% or less, more preferably 100% or less, and still more preferably 50% or less. The elongation is usually 2% or more. Thus, the tensile strength of the polyester-based fibers is preferably 2 to 50 cN/dtex and more preferably 3 to 50 cN/dtex, and the elongation is preferably 2 to 400%, more preferably 2 to 100%, and still more preferably 2 to 50%. When the tensile strength and the elongation of the polyester-based fibers fall within the ranges above, the expansion of electrodes obtained from the composition for electrodes can be further suppressed. The tensile strength and the elongation of the polyester-based fibers can be measured, for example, according to JIS L 1013:2021.

As a polymer constituting the ethylene-vinyl alcohol-based copolymer fibers, an ethylene unit is, for example, 10 to 70% by mol and preferably 30 to 50% by mol, and the remainder may be a vinyl alcohol unit alone or may contain vinyl alcohol and other vinyl monomer units. When vinyl alcohol and other vinyl monomer units are contained, the proportion of the vinyl alcohol unit is usually preferably larger than that of the other vinyl monomer units.

The ethylene-vinyl alcohol-based copolymer can be obtained by saponifying a vinyl acetate portion of an ethylene/vinyl acetate-based copolymer. The saponification degree of the vinyl alcohol unit in the ethylene-vinyl alcohol-based copolymer is, for example, 90 to 99.99% by mol, preferably 95 to 99.98% by mol, and more preferably 96 to 99.97% by mol.

The number average molecular weight of the ethylene-vinyl alcohol-based copolymer is not particularly limited, and, from the viewpoint of handling properties of fibers to be obtained, is preferably 5,000 to 25,000 and more preferably 8,000 to 20,000. The number average molecular weight of the ethylene-vinyl alcohol-based copolymer can be determined by the same method as that for the number average molecular weight of the PVA-based polymer.

Examples of polymers constituting the polyamide-based fibers include aliphatic polyamides (e.g., polyamide 6, polyamide 66, polyamide 11, polyamide 12, polyamide 610, polyamide 612, and polyamide 9C), semi-aromatic polyamides (e.g., polyamide 9T) synthesized from aromatic dicarboxylic acids and aliphatic diamines, fully aromatic polyamides synthesized from aromatic dicarboxylic acids, such as polyparaphenylene terephthalamide, and aromatic diamines, and the like.

Examples of polymers constituting the polyimide-based fibers include polyimide polymers obtained by a reaction of aromatic diamine compounds (e.g., para-phenylenediamine (PPD) and the like) with tetracarboxylic acid-based compounds (e.g., pyromellitic dianhydrides (PMDA) and the like), polyetherimide polymers and polyamideimide polymers containing ether units and cyclic imides as repeating units, and the like.

The polymers may contain additives, such as antifoaming agents, flame retardants, anti-freezing agents, pH adjusters, concealing agents, coloring agents, oils, and special function agents, according to the purpose, insofar as the advantageous effects of the present invention are not impaired. These additives may be contained alone or in combination.

[Binder]

A binder contained in the composition for electrodes of the present invention preferably contains at least one selected from the group consisting of synthetic resin-based binders, natural resin-based binders, semisynthetic resin-based binders, silicate-based binders, phosphate-based binders, sol-based binders, and cement-based binders. Among the above, synthetic resin-based binders are more preferable because both good coatability of the composition for electrodes and the suppression of expansion of electrodes obtained from the composition are easily achieved.

Examples of synthetic resin-based binders include polyvinylidene fluoride (PVDF), carboxymethyl cellulose (CMC), a PVA-based polymer, hydroxypropyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyethylene, polypropylene, polyamideimide, polyimide, styrene-butadiene rubber (SBR), acrylated styrene-butadiene rubber, epoxy resin, nylon, sodium polyacrylate, copolymers of propylene and olefins having 2 to 8 carbon atoms, copolymers of (meth)acrylic acids and (meth)acrylic acid alkyl esters, and the like. Among the above, a PVA-based polymer or SBR is preferable because both good coatability of the composition for electrodes and the suppression of expansion of electrodes obtained from the composition are more easily achieved.

Examples of natural resin-based binders include glue, starch, lacquer, and the like.

Examples of semisynthetic resin-based binders include diacetyl cellulose, nitrile cellulose, and the like.

Examples of silicate-based binders include $Li_2O \cdot nSiO_2$, $Na_2O \cdot nSiO_2$, $K_2O \cdot nSiO_2$, and the like.

Examples of phosphate-based binders include aluminum phosphate, magnesium phosphate, and the like.

Examples of sol-based binders include fumed silica and the like.

Examples of cement-based binders include Portland cement, alumina cement, and the like.

The above-described binders may be used alone or as a mixture of two or more thereof. The content of the binder can be adjusted as appropriate according to the type of the binder, and is, based on 100 parts by mass of the composition for electrodes, preferably 0.09 parts by mass or more, more preferably 0.18 parts by mass or more, still more preferably 0.45 parts by mass or more, even still more preferably 0.9 parts by mass or more, and particularly preferably 1.3 parts by mass or more, and is preferably 18 parts by mass or less, more preferably 16 parts by mass or less, still more preferably 15 parts by mass or less, and particularly preferably 11 parts by mass or less. Thus, the binder is preferably 0.09 to 18 parts by mass, more preferably 0.18 to 16 parts by mass, still more preferably 0.45 to 15 parts by mass, and even still more preferably 0.9 to 11 parts by mass or 1.3 to 11 parts by mass based on 100 parts by mass of the composition for electrodes. The content is, based on 100 parts by mass of an active material of the composition for electrodes described below, preferably 0.1 parts by mass or more, more preferably 0.2 parts by mass or more, still more preferably 0.5 parts by mass or more, even still more preferably 1 parts by mass or more, particularly preferably 3.3 parts by mass or more, and more particularly preferably 4 parts by mass or more, and is preferably 20 parts by mass or less, more preferably 18 parts by mass or less, still more preferably 16 parts by mass or less, and particularly preferably 12 parts by mass or less. Thus, the binder is, based on 100 parts by mass of the active material of the composition for electrodes described below, preferably 0.1 to 20 parts by mass, more preferably 0.2 to 20 parts by mass, still more preferably 0.5 to 18 parts by mass, even still more preferably 1 to 18 parts by mass, particularly preferably 3.3 to 16 parts by mass, and more particularly preferably 4 to 12 parts by mass. When the content of the binder is 0.1 parts by mass or more based on 100 parts by mass of the active material, the adhesion of the active material to a current collector is improved, which is advantageous from the viewpoint of maintaining the durability of a battery to which the present invention is applied. Further, when the content of the binder is 20 parts by mass or less based on 100 parts by mass of the active material, the discharge capacity is likely to improve.

The number average molecular weight of the PVA-based binder is not particularly limited, and, from the viewpoint of handling properties of the composition for electrodes, is, for example, 20,000 or more and more preferably 70,000 or more, and preferably 250,000 or less and more preferably 200,000 or less. Thus, the number average molecular weight of the PVA-based binder may be, for example, 20,000 to 250,000 and preferably 70,000 to 200,000. The number average molecular weight can be determined, for example, by gel permeation chromatography (GPC) using polymethyl methacrylate as a standard substance.

The viscosity-average degree of polymerization of the PVA-based binder is not particularly limited, and, from the viewpoint of handling properties of the composition for electrodes, is, for example, 500 or more and preferably 1,500 or more, and, for example, 5,000 or less and preferably 4,500 or less. Thus, the viscosity-average degree of polymerization of the PVA-based binder is, for example, 500 to 5,000 and preferably 1,500 to 4,500. The viscosity-average degree of polymerization can be measured, for example, based on JIS K 6726:1994 "Testing Methods for Polyvinyl Alcohol". Specifically, when the saponification degree is less than 99.5% by mol, the viscosity-average degree of polymerization can be determined from the intrinsic viscosity [η] (liter/g) measured at 30°C in water using the following expression for PVA saponified until the saponification degree reaches 99.5% by mol or more.

$$\text{Viscosity-average degree of polymerization} = ([\eta] \times 10^4/8.29)^{(1/0.62)}$$

The saponification degree of the PVA-based binder can also be selected as appropriate according to the purpose and is not particularly limited. From the viewpoint of handling properties and the like of the composition for electrodes, the saponification degree is, for example, 80% by mol or more and preferably 85% by mol or more. The upper limit of the saponification degree is 100% by mol or less. Thus, the saponification degree of the PVA-based binder is, for example, 80 to 100% by mol and preferably 85 to 100% by mol. The saponification degree can be determined, for example, according to JIS K 6726:1994.

The PVA-based binder used in the present invention may be an unmodified PVA containing only a vinyl alcohol unit or may be modified with at least one monomer selected from the group consisting of a carboxylic acid having an unsaturated double bond, an alkyl ester of the carboxylic acid, an acid anhydride of the carboxylic acid, a salt of the carboxylic acid, and a silyl compound having an unsaturated double bond. Examples of such monomers can include preferably maleic acid, monomethyl maleate, dimethyl maleate, monoethyl maleate, diethyl maleate, maleic anhydride, citraconic acid, monomethyl citraconate, dimethyl citraconate, diethyl citraconate, citraconic anhydride, fumaric acid, monomethyl fumarate, dimethyl fumarate, monoethyl fumarate, diethyl fumarate, itaconic acid, monomethyl itaconate, dimethyl itaconate, monoethyl itaconate, diethyl itaconate, itaconic anhydride, acrylic acid, methyl acrylate, ethyl acrylate, methacrylic acid, methyl methacrylate, ethyl methacrylate, and vinyltrimethoxysilane and more preferably monomethyl maleate, dimethyl maleate, monomethyl fumarate, itaconic anhydride, methyl acrylate, methyl methacrylate, vinyltrimethoxysilane, and the like.

The number average molecular weight and the viscosity-average degree of polymerization of an SBR-based binder used in the present invention are not particularly limited. From the viewpoint of handling properties of the composition for electrodes to be obtained, it is preferable that the number average molecular weight is 20,000 or more and 300,000 or less and the viscosity-average degree of polymerization is 100 or more and 1,500 or less. The number average molecular weight and the viscosity-average degree of polymerization of the SBR-based binder can be determined by the same methods as those for the number average molecular weight and the viscosity-average degree of polymerization of the PVA-based binder.

[Active Material]

The composition for electrodes of the present invention may further contain an active material. The composition for electrodes of the present invention may be used for either electrode of a cathode and an anode. The composition for electrodes of the present invention may also be used for both a cathode and an anode. Therefore, the active material may be either a cathode active material or an anode active material.

In the composition for electrodes of the present invention, the content of the organic fibers is preferably 0.01 parts by mass or more, more preferably 0.1 parts by mass or more, and still more preferably 0.3 parts by mass or more based on 100 parts by mass of the above-described active material from the viewpoint of easily exhibiting the reinforcing effect by the organic fibers and easily suppressing the expansion of electrodes. From the viewpoint of easily suppressing entanglement of fibers in mixing and improving the coatability of the composition, the content of the organic fibers is preferably 10 parts by mass or less, more preferably 6 parts by mass or less, still more preferably 4 parts by mass or less, and even still more preferably 3 parts by mass or less. Thus, the content of the organic fibers is preferably 0.01 to 10 parts by mass, more preferably 0.1 to 6 parts by mass, still more preferably 0.3 to 4 parts by mass, and even still more preferably 0.3 to 3 parts by mass based on 100 parts by mass of the active material.

For the anode active material, materials conventionally usable as anode active materials of a nonaqueous electrolyte battery are usable, for example. Examples thereof include carbonaceous materials, such as conductive polymers, e.g., amorphous carbon, artificial graphite, natural graphite (graphite), mesocarbon microbeads (MCMB), pitch-based carbon fibers, activated carbon, carbon fibers, hard carbon, soft carbon, mesoporous carbon, and polyacene, composite metal oxides represented by $SiO_x$, $SnO_x$, and $LiTiO_x$, other metal oxides, lithium-based metals, such as lithium metal and lithium alloy, metal compounds, such as $TiS_2$ and $LiTiS_2$, composite materials of metal oxides and carbonaceous materials, and the like. These anode active materials can be used alone or in combination of two or more thereof.

For the cathode active material, materials conventionally usable as cathode active materials of a nonaqueous electrolyte battery are usable, for example. Examples thereof include transition metal oxides, such as $TiS_2$, $TiS_3$, amorphous $MoS_3$, $Cu_2V_2O_3$, amorphous $V_2O-P_2O_5$, $MoO_3$, $V_2O_5$, and $V_6O_{13}$, lithium-containing cobalt oxide ($LiCoO_2$), lithium-containing nickel oxide ($LiNiO_2$), lithium manganese ($LiMn_2O_4$), Co-Ni-Mn lithium-containing composite oxide, Ni-Mn-Al lithium-containing composite oxide, Ni-Co-Al lithium-containing composite oxide, olivine-type lithium iron phos-

phate (LiFePO$_4$), olivine-type lithium manganese phosphate (LiMnPO$_4$), a lithium-rich spinel compound represented by Li$_{1+x}$Mn$_{2-x}$O$_4$ (0 < x < 2), metal oxides, such as Li[Ni$_{0.17}$Li$_{0.2}$Co$_{0.07}$Mn$_{0.56}$]O$_2$ and LiNi$_{0.5}$Mn$_{1.5}$O$_4$, sulfur, and organic radicals, such as compounds and polymers having nitroxyl radicals, compounds and polymers having oxy radicals, compounds and polymers having nitrogen radicals, and compounds and polymers having a fulvalene skeleton. These cathode active materials can be used alone or in combination of two or more thereof.

Among the above, from the viewpoint of improving the battery capacity or the like of batteries obtained from the composition for electrodes of the present invention, it is preferable to use, as the cathode active material, LiCoO$_2$; LiNiO$_2$; Co-Ni-Mn lithium-containing composite oxides, e.g., LiNi$_{1/3}$Co$_{1/3}$Mn$_{1/3}$O$_2$, LiNi$_{0.5}$Co$_{0.2}$Mn$_{0.3}$O$_2$, and LiNi$_{0.8}$Co$_{0.1}$Mn$_{0.1}$O$_2$; Ni-Co-Al lithium-containing composite oxides, e.g., LiNi$_{0.8}$Co$_{0.1}$Al$_{0.1}$O$_2$ and LiNi$_{0.8}$Co$_{0.15}$Al$_{0.05}$O$_2$, and the like.

In the composition for electrodes of the present invention, the content of the active material is not particularly limited and can be adjusted as appropriate according to the type of the active material to be used, and is, for example, 3 to 97% by mass and preferably 5 to 95% by mass based on the total mass of the solid content of the composition for electrodes.

[Conductive Agent]

The composition for electrodes of the present invention may contain a conductive agent. The conductive agent is used to increase the output of a nonaqueous electrolyte battery and can be selected as appropriate according to whether it is used for a cathode or an anode. Examples thereof include, for example, carbon-based substances, such as graphite, acetylene black, carbon black, carbon nanotubes, Ketjen black, and vapor-grown carbon fibers (VGCF); metal substances, such as metal powders of copper, nickel, aluminum, silver, and the like; conductive polymers, such as polyphenylene derivatives, and the like. These substances may be used alone or in combination of two or more thereof.

The amount of the conductive agent contained in the composition for electrodes is not particularly limited and can be adjusted as appropriate according to the type of the conductive agent to used, and is, for example, 0.1 to 30% by mass and more preferably 0.5 to 20% by mass based on the total mass of the solid content of the composition for electrodes. By setting the amount of the conductive agent in the ranges above, the expected conductivity is easily obtained without deteriorating the dispersion of the conductive agent in the composition for electrodes.

[Solvent]

The composition for electrodes of the present invention may contain a solvent. The solvent is preferably one that can dissolve the above-described binder, and can be appropriately selected as appropriate according to the binder to be used. Examples of the solvent include water; alcohols, such as methanol, ethanol, propanol, and 2-propanol; cyclic ethers, such as tetrahydrofuran and 1,4-dioxane; amides, such as N,N-dimethylformamide and N,N-dimethylacetamide; cyclic amides, such as N-methylpyrrolidone and N-ethylpyrrolidone; sulfoxides, such as dimethyl sulfoxide; hydrocarbons, such as n-dodecane; esters, such as $\gamma$-butyrolactone and methyl lactate; and sulfoxides/sulfones, such as dimethyl sulfoxide and sulfolane. These substances may be used alone or in combination of two or more thereof.

In the present invention, the amount of the solvent contained in the composition for electrodes is not particularly limited and may be adjusted as appropriate according to the type and the amount of the binder to be used, the desired viscosity of the composition, and the like.

[Other Additives]

The composition for electrodes of the present invention may contain, as necessary, additives that can impart viscosity, toughness, and the like to the composition for electrodes, other than the organic fibers of the present invention. Such additives are not particularly limited and, for example, various alcohols, particularly polyvinyl alcohol and a modified product thereof; celluloses, such as CMC; polysaccharides; polyethers, such as polyethylene glycol and polypropylene glycol; polyamines; pyrrolidones; maleic acids, and the like are usable.

Among the other additives, the composition for electrodes of the present invention may contain a thickener because the thixotropy of the composition is easily improved. The solid content amount of the thickener, which is compounded as necessary into the composition for electrodes of the present invention, is preferably 0.1 to 3% by mass and more preferably 0.5 to 2% by mass based on the total mass of the solid content of the composition for electrodes.

The composition for electrodes of the present invention can be manufactured by mixing the binder and the organic fibers and, as necessary, the active material, the conductive agent, the solvent, and/or the other additives. A mixing method is not particularly limited, and examples thereof include a method in which the components contained in the composition for electrodes are uniformly mixed using a mixing and stirring device, such as a planetary mixer, and the like.

[Electrode]

An electrode can be formed by binding the composition for electrodes of the present invention to a current collector, for example, by coating.

A method of applying the composition for electrodes of the present invention onto a current collector is not particularly limited, and any known method is usable. Specifically, a doctor blade method, a dip method, a reverse roll method, a direct roll method, a gravure method, an extrusion method, a brush coating method, and the like are usable, for example. In this case, the composition for electrodes of the present invention may be applied to only one side or to both sides of a current collector. The thickness of a film of the composition for electrodes on the current collector after application and before drying may be set as appropriate according to the thickness of an electrode to be obtained by drying, and is preferably 0.005 to 5 mm and more preferably 0.01 to 2 mm.

The current collector to which the composition for electrodes of the present invention is applied is not particularly limited insofar as it is a material having electrical conductivity and electrochemical durability. For example, metal materials, such as iron, copper, aluminum, nickel, stainless steel, titanium, tantalum, gold, and platinum, are usable. These substances may be used alone or in combination of two or more thereof in any ratio. The shape of the current collector is not particularly limited, and, in usual, preferably a sheet shape having a thickness of about 0.001 to 0.5 mm.

A method of drying the composition for electrodes on the current collector is not particularly limited and any known method is usable. Examples thereof include drying with warm air, hot air, or low-humidity air, vacuum drying, or drying by irradiation with infrared rays or electron beams. By drying the composition for electrodes on the current collector as described above, an electrode can be obtained.

After the drying step, the electrode may be subjected to pressurization treatment. A method of pressuring the electrode includes methods, such as die pressing and roll pressing. The pressurization treatment can improve the adhesion between the composition for electrodes and the current collector.

[Battery]

The electrodes (cathode and anode) are arranged to face each other with a separator interposed therebetween as necessary, and then immersed in an electrolyte solution, so that a nonaqueous electrolyte battery can be formed.

As the separator that can be present between the cathode and the anode, polyethylene, polypropylene, polyvinylidene fluoride, or multilayer films containing two or more layers thereof may be used or mixed multilayer films, such as a polyethylene/polypropylene two-layer separator, a polyethylene/polypropylene/polyethylene three-layer separator, and a polypropylene/polyethylene/polypropylene three-layer separator, may also be used.

The electrolyte solution is one in which an electrolyte has been dissolved in a solvent, and may be in the form of liquid or a gel insofar as it is used for common nonaqueous electrolyte batteries. One exhibiting a function as a battery may be selected as appropriate according to the type of the anode active material and the cathode active material. Specific examples of the electrolyte include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $CF_3SO_3Li$, $CH_3SO_3Li$, $LiCF_3SO_3$, $LiC_4F_9SO_3$, $Li(CF_3SO_2)_2N$, $LiN(C_xF_{2x+1}SO_2)(C_yF_{2y+1}SO_2)$ (x and y are natural numbers), $LiI$, $LiB(C_2O_4)_2$ (lithium bis(oxalato)borate [LiBOB]), lower aliphatic lithium carboxylates, and the like.

A solvent (electrolyte solution solvent) in which the electrolyte is dissolved is not particularly limited. Specific examples thereof include carbonates, such as propylene carbonate, ethylene carbonate, butylene carbonate, dimethyl carbonate, diethyl carbonate, vinylene carbonate, and ethyl methyl carbonate; lactones, such as γ-butyl lactone; ethers, such as trimethoxymethane, 1,2-dimethoxyethane, diethyl ether, 2-ethoxyethane, tetrahydrofuran, and 2-methyltetrahydrofuran; sulfoxides, such as dimethyl sulfoxide; oxolanes, such as 1,3-dioxolane and 4-methyl-1,3-dioxolane; nitrogen-containing compounds, such as acetonitrile and nitromethane; organic acid esters, such as methyl formate, methyl acetate, ethyl acetate, butyl acetate, methyl propionate, and ethyl propionate; inorganic acid esters, such as triethyl phosphate, dimethyl carbonate, and diethyl carbonate; diglymes; triglymes; sulfolanes; oxazolidinones, such as 3-methyl-2-oxazolidinone; sultones, such as 1,3-propane sultone, 1,4-butane sultone, and naphtha sultone, and the like. These substances can be used alone or in combination of two or more thereof. When a gel-like electrolyte solution is used, a nitrile-based polymer, an acrylic polymer, a fluorine-based polymer, an alkylene oxide-based polymer, or the like can be added as a gelling agent.

A method of manufacturing a nonaqueous electrolyte battery is not particularly limited, and, for example, an anode and a cathode are stacked with a separator interposed therebetween, rolled or folded, for example, according to the battery shape, and arranged in a battery case, and then an electrolyte solution is injected and sealed. The shape of the battery may be any known shapes, such as a coin shape, a button shape, a sheet shape, a cylindrical shape, a square shape, or a flat shape.

EXAMPLES

Hereinafter, the present invention is more specifically described based on Examples and Comparative Examples, but the present invention is not limited to Examples below.

[Viscosity-Average Degree of Polymerization]

For PVA saponified until the saponification degree reached 99.5% by mol or more, the viscosity-average degree of polymerization of the PVA was determined using the intrinsic viscosity $[\eta]$ (liter/g) measured at 30°C in water by the following expression.

$$\text{Viscosity-average degree of polymerization} = ([\eta] \times 10^4/8.29)^{(1/0.62)}$$

[Saponification Degree]

The saponification degree of the PVA was measured according to the method described in JIS K 6726:1994 ("Testing methods for polyvinyl alcohol").

[Specific Gravity]

The specific gravities of fibers used in of Examples and Comparative Examples were measured according to the density-gradient tube method described in JIS L 1013:2021 ("Testing methods for man-made filament yarns").

[Fiber Length and Fiber Diameter]

The fiber lengths of fibers used in Examples and Comparative Examples were measured by measuring the fiber lengths of randomly selected 100 fibers, and setting the average value of the measurement values as the fiber length. The fiber diameter was measured by measuring the fiber diameters of randomly selected 30 fibers through microscopic observation, and setting the average value of the measurement values as the fiber diameter.

[SP Value]

As the SP value of the fibers used in Examples and Comparative Examples, the numerical value described in "Polymer Hand Book (4th) Edition, (1999), Wiley-Interscience" was used.

(Example 1)

[Preparation of Aqueous PVA Binder Solution]

To 9.72 g of PVA (viscosity-average degree of polymerization of 1700, saponification degree of 88% by mol), 90.28 g of ion exchanged water was added, followed by heating and stirring at 80°C for 1 hour, to give an aqueous PVA binder solution having a solid content concentration of 9.72% by mass.

[Preparation of Aqueous Organic-Fiber-Dispersed PVA Binder Solution]

To 23.456 g of the aqueous PVA binder solution prepared above, 0.12 g of PVA fibers having an oval cross-sectional shape (specific gravity: 1.28, SP value: 12.6 $(cal/cm^3)^{1/2}$, fiber length: 2 mm, fiber diameter: 5 $\mu$m) was added as the organic fibers, followed by stirring using a stirrer to give an aqueous organic-fiber-dispersed PVA binder solution.

[Preparation of Composition for Nonaqueous Electrolyte Battery Electrodes]

In a dedicated container, 49.12 parts by mass of the prepared aqueous organic-fiber-dispersed PVA binder solution, 90 parts by mass of a mixture of SiOx (BSO-1, manufactured by BTR) and artificial graphite (FSN-1, manufactured by Shanghai Shanshan Tech Co., Ltd.) in a 1:1 ratio as the anode active material, 5 parts by mass of carbon black (Super C45, manufactured by TimCal) as the conductive agent, and 48.87 parts by mass of ion exchanged water were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.28 parts by mass).

(Example 2)

[Aqueous SBR Binder Solution]

For the SBR binder, TRD2001 (solid content concentration of 48.4% by mass) manufactured by JSR Corporation was used.

[Preparation of Composition for Nonaqueous Electrolyte Battery Electrodes]

In a dedicated container, 6.28 parts by mass of the aqueous SBR binder solution having a solid content concentration of 48.4% by mass, 90 parts by mass of a mixture of SiOx (BSO-1, manufactured by BTR) and artificial graphite (FSN-1, manufactured by Shanghai Shanshan Tech Co., Ltd.) in a 1:1 ratio, 5 parts by mass of carbon black (Super C45, manufactured by TimCal), CMC (CELLOGEN BSH-6, manufactured by DKS Co. Ltd.) in such an amount that the solid content was 1.67 parts by mass as the thickener, and 0.25 parts by mass of PVA fibers having an oval cross-sectional shape (specific gravity: 1.28, SP value: 12.6 $(cal/cm^3)^{1/2}$, fiber length: 2 mm, fiber diameter: 5 $\mu$m) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.28 parts by mass).

(Example 3)

A composition for nonaqueous electrolyte battery electrodes was obtained in the same manner as in Example 2, except for using PVA fibers having a fiber length of 9 mm and a fiber diameter of 18 $\mu$m (specific gravity: 1.28, SP value: 12.6 $(cal/cm^3)^{1/2}$, cross-sectional shape: oval shape) as the organic fibers.

(Example 4)

In a dedicated container, 5.69 parts by mass of the aqueous SBR binder solution having a solid content concentration of 48.4% by mass used in Example 2, 85.54 parts by mass of a mixture of SiOx (BSO-1, manufactured by BTR) and artificial graphite (FSN-1, manufactured by Shanghai Shanshan Tech Co., Ltd.) in a 1:1 ratio, 5 parts by mass of carbon black (Super C45, manufactured by TimCal), CMC (CELLOGEN BSH-6, manufactured by DKS Co. Ltd.) in such an amount that the solid content was 1.67 parts by mass as the thickener, and 5.00 parts by mass of PVA fibers (specific gravity: 1.28, SP value: 12.6 $(cal/cm^3)^{1/2}$, fiber length: 2 mm, fiber diameter: 5 $\mu$m, cross-sectional shape: oval shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 5.85 parts by mass).

(Example 5)

A composition for nonaqueous electrolyte battery electrodes was obtained in the same manner as in Example 2, except that the amount of the organic fibers based on 100 parts by mass of an active material was 0.01 parts by mass.

(Example 6)

A composition for nonaqueous electrolyte battery electrodes was obtained in the same manner as in Example 2, except for using PVA fibers having a fiber length of 2 mm and a fiber diameter of 3 $\mu$m (specific gravity: 1.28, SP value: 12.6 $(cal/cm^3)^{1/2}$, cross-sectional shape: oval shape) as the organic fibers.

(Example 7)

In a dedicated container, 6.88 parts by mass of the aqueous SBR binder solution having a solid content concentration of 48.4% by mass used in Example 2, 89.91 parts by mass of a mixture of SiOx (BSO-1, manufactured by BTR) and artificial graphite (G49, manufactured by Zichen) in a 2:8 ratio, 5 parts by mass of carbon black (SuperP, manufactured by MTI Corporation), CMC (CELLOGEN BSH-6, manufactured by DKS Co. Ltd.) in such an amount that the solid content was 1.67 parts by mass as the thickener, and 0.10 parts by mass of PVA fibers (specific gravity: 1.28, SP value: 12.6 (cal/cm³)^½, fiber length: 2 mm, fiber diameter: 5 μm, cross-sectional shape: oval shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.11 parts by mass).

(Example 8)

In a dedicated container, 6.86 parts by mass of the aqueous SBR binder solution having a solid content concentration of 48.4% by mass used in Example 2, 89.78 parts by mass of a mixture of SiOx (BSO-1, manufactured by BTR) and artificial graphite (G49, manufactured by Zichen) in a 2:8 ratio, 4.99 parts by mass of carbon black (SuperP, manufactured by MTI Corporation), CMC (CELLOGEN BSH-6, manufactured by DKS Co. Ltd.) in such an amount that the solid content was 1.67 parts by mass) as the thickener, and 0.25 parts by mass of PVA fibers (specific gravity: 1.28, SP value: 12.6 (cal/cm³)^½, fiber length: 2 mm, fiber diameter: 5 μm, cross-sectional shape: oval shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.28 parts by mass).

(Example 9)

In a dedicated container, 6.84 parts by mass of the aqueous SBR binder solution having a solid content concentration of 48.4% by mass used in Example 2, 89.55 parts by mass of a mixture of SiOx (BSO-1, manufactured by BTR) and artificial graphite (G49, manufactured by Zichen) in a 2:8 ratio, 4.98 parts by mass of carbon black (SuperP, manufactured by MTI Corporation), CMC (CELLOGEN BSH-6, manufactured by DKS Co. Ltd.) in such an amount that the solid content was 1.66 parts by mass as the thickener, and 0.50 parts by mass of PVA fibers (specific gravity: 1.28, SP value: 12.6 (cal/cm³)^½, fiber length: 2 mm, fiber diameter: 5 μm, cross-sectional shape: oval shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.56 parts by mass).

(Example 10)

In a dedicated container, 6.84 parts by mass of the aqueous SBR binder solution having a solid content concentration of 48.4% by mass used in Example 2, 89.33 parts by mass of a mixture of SiOx (BSO-1, manufactured by BTR) and artificial graphite (G49, manufactured by Zichen) in a 2:8 ratio, 4.96 parts by mass of carbon black (SuperP, manufactured by MTI Corporation), CMC (CELLOGEN BSH-6, manufactured by DKS Co. Ltd.) in such an amount that the solid content was 1.66 parts by mass as the thickener, and 0.75 parts by mass of PVA fibers (specific gravity: 1.28, SP value: 12.6 (cal/cm³)^½, fiber length: 2 mm, fiber diameter: 5 μm, cross-sectional shape: oval shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.84 parts by mass).

(Example 11)

A composition for nonaqueous electrolyte battery electrodes was obtained in the same manner as in Example 9, except for using PVA fibers (specific gravity: 1.28, SP value: 12.6 (cal/cm³)^½, cross-sectional shape: oval shape) having a fiber length of 3 mm and a fiber diameter of 5 μm as the organic fibers.

(Example 12)

A composition for nonaqueous electrolyte battery electrodes was obtained in the same manner as in Example 9, except for using PVA fibers (specific gravity: 1.28, SP value: 12.6 (cal/cm³)^½, cross-sectional shape: oval shape) having a fiber length of 3 mm and a fiber diameter of 7 μm as the organic fibers.

(Example 13)

A composition for nonaqueous electrolyte battery electrodes was obtained in the same manner as in Example 9, except for using PVA fibers (specific gravity: 1.28, SP value: 12.6 (cal/cm³)^½, cross-sectional shape: oval shape) having a fiber length of 0.5 mm and a fiber diameter of 7 μm as the organic fibers.

(Example 14)

A composition for nonaqueous electrolyte battery electrodes was obtained in the same manner as in Example 9, except for using PVA fibers (specific gravity: 1.28, SP value: 12.6 $(cal/cm^3)^{1/2}$) having a fiber length of 3 mm, a fiber diameter of 7 $\mu$m, and a circular cross-sectional shape as the organic fibers.

(Example 15)

[Preparation of Aqueous Organic-Fiber-Dispersed PVA Binder Solution]

An aqueous organic-fiber-dispersed PVA binder solution was obtained by adding 0.1285 g of PVA fibers (specific gravity: 1.28, SP value: 12.6 $(cal/cm^3)^{1/2}$, fiber length: 2 mm, fiber diameter: 5 $\mu$m, cross-sectional shape: oval shape) as the organic fibers to 25.59 g of the aqueous PVA binder solution prepared in Example 1, followed by stirring using a stirrer.

[Preparation of Composition for Nonaqueous Electrolyte Battery Electrodes]

In a dedicated container, 51.68 parts by mass of the aqueous organic-fiber-dispersed PVA binder solution prepared above, 89.55 parts by mass of a mixture of SiOx (BSO-1, manufactured by BTR) and artificial graphite (G49, manufactured by Zichen) in a 2:8 ratio as the anode active material, 4.975 parts by mass of carbon black (SuperP, manufactured by MTI Corporation) as the conductive agent, and 46.50 parts by mass of ion exchanged water were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.56 parts by mass).

(Comparative Example 1)

A composition for nonaqueous electrolyte battery electrodes was obtained in the same manner as in Example 2, except for using PVA fibers (specific gravity: 1.28, SP value: 12.6 $(cal/cm^3)^{1/2}$, fiber length: 12 mm, fiber diameter: 5 $\mu$m, cross-sectional shape: circular shape) as the organic fibers.

(Comparative Example 2)

A composition for nonaqueous electrolyte battery electrodes was obtained in the same manner as in Example 2, except for using polypropylene (PP) fibers (specific gravity: 0.91, SP value: 8.1 $(cal/cm^3)^{1/2}$, fiber length: 3 mm, fiber diameter: 7 $\mu$m, cross-sectional shape: circular shape) as the organic fibers.

(Comparative Example 3)

A composition for nonaqueous electrolyte battery electrodes was obtained in the same manner as in Example 2, except for using glass fibers (GF) (specific gravity: 2.5, fiber length: 3 mm, fiber diameter: 6.5 $\mu$m, cross-sectional shape: circular shape) as fibers.

(Comparative Example 4)

In a dedicated container, 50 parts by mass of the aqueous PVA binder solution prepared in Example 1, 90 parts by mass of a mixture of SiOx (BSO-1, manufactured by BTR) and artificial graphite (FSN-1, manufactured by Shanghai Shanshan Tech Co., Ltd.) in a 1:1 ratio as the anode active material, 5 parts by mass of carbon black (Super C45, manufactured by TimCal) as the conductive agent, and 56 parts by mass of ion exchanged water were placed, followed by mixing using a planetary centrifugal mixer (ARE-310, manufactured by THINKY CORPORATION), to give a composition for nonaqueous electrolyte battery electrodes.

(Comparative Example 5)

In a dedicated container, 6.79 parts by mass of the aqueous SBR binder solution having a solid content concentration of 48.4 parts by mass used in Example 2, 90 parts by mass of a mixture of SiOx (BSO-1, manufactured by BTR) and artificial graphite (FSN-1, manufactured by Shanghai Shanshan Tech Co., Ltd.) in a 1:1 ratio, 5 parts by mass of carbon black (Super C45, manufactured by TimCal), and CMC (CELLOGEN BSH-6, manufactured by DKS Co. Ltd.) in such an amount that the solid content was 1.67 parts by mass as the thickener were placed, followed by mixing using a planetary centrifugal mixer (ARE-310, manufactured by THINKY CORPORATION), to give a composition for nonaqueous electrolyte battery electrodes.

(Comparative Example 6)

In a dedicated container, 6.86 parts by mass of the aqueous SBR binder solution having a solid content concentration of 48.4% by mass used in Example 2, 89.84 parts by mass of a mixture of SiOx (BSO-1, manufactured by BTR) and artificial graphite (G49, manufactured by Zichen) in a 2:8 ratio, 4.99 parts by mass of carbon black (SuperP, manufactured by MTI Corporation), CMC (CELLOGEN BSH-6, manufactured by DKS Co. Ltd.) in such an amount that the solid content was 1.67 parts by mass as the thickener, and 0.18 parts by mass of PP fibers (specific gravity: 0.91, SP value: 8.1 $(cal/cm^3)^{1/2}$, fiber length: 3 mm, fiber diameter: 7 $\mu$m, cross-sectional shape: circular shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.20 parts by mass).

(Comparative Example 7)

In a dedicated container, 6.86 parts by mass of the aqueous SBR binder solution having a solid content concentration of 48.4% by mass used in Example 2, 89.68 parts by mass of a mixture of SiOx (BSO-1, manufactured by BTR) and artificial graphite (G49, manufactured by Zichen) in a 2:8 ratio, 4.98 parts by mass of carbon black (SuperP, manufactured by MTI Corporation), CMC (CELLOGEN BSH-6, manufactured by DKS Co. Ltd.) in such an amount that the solid content was 1.66 parts by mass as the thickener, and 0.36 parts by mass of PP fibers (specific gravity: 0.91, SP value: 8.1 $(cal/cm^3)^{1/2}$, fiber length: 3 mm, fiber diameter: 7 $\mu$m, cross-sectional shape: circular shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.40 parts by mass).

(Comparative Example 8)

In a dedicated container, 89.13 parts by mass of a mixture of SiOx (BSO-1, manufactured by BTR) and artificial graphite (G49, manufactured by Zichen) in a 2:8 ratio, 4.95 parts by mass of carbon black (SuperP, manufactured by MTI Corporation), CMC (CELLOGEN BSH-6, manufactured by DKS Co. Ltd.) in such an amount that the solid content was 1.65 parts by mass as the thickener, and 0.98 parts by mass of GF (specific gravity: 2.5, fiber length: 3 mm, fiber diameter: 6.5 $\mu$m, cross-sectional shape: circular shape) were placed, followed by mixing using a planetary centrifugal mixer (ARE-310, manufactured by THINKY CORPORATION), and then 6.82 parts by mass of the aqueous SBR binder solution having a solid content concentration of 48.4% by mass used in Example 2 was added, followed by mixing again, to give a composition for nonaqueous electrolyte battery electrodes (organic fiber amount based on 100 parts by mass of active material: 1.10 parts by mass).

(Comparative Example 9)

In a dedicated container, 6.84 parts by mass of the aqueous SBR binder solution having a solid content concentration of 48.4% by mass used in Example 2, 89.47 parts by mass of a mixture of SiOx (BSO-1, manufactured by BTR) and artificial graphite (G49, manufactured by Zichen) in a 2:8 ratio, 4.97 parts by mass of carbon black (SuperP, manufactured by MTI Corporation), CMC (CELLOGEN BSH-6, manufactured by DKS Co. Ltd.) in such an amount that the solid content was 1.66 parts by mass as the thickener, and 0.59 parts by mass of cellulose nanofibers (CNF) (specific gravity: 1.5, SP value: 15.7 $(cal/cm^3)^{1/2}$, fiber length: 0.01 mm, fiber diameter: 0.003 $\mu$m, cross-sectional shape: circular shape) were placed, followed by mixing using a planetary centrifugal mixer (ARE-310, manufactured by THINKY CORPORATION), to give a composition for nonaqueous electrolyte battery electrodes (organic fiber amount based on 100 parts by mass of active material: 0.66 parts by mass).

(Comparative Example 10)

In a dedicated container, 6.88 parts by mass of the aqueous SBR binder solution having a solid content concentration of 48.4 parts by mass used in Example 2, 90 parts by mass of a mixture of SiOx (BSO-1, manufactured by BTR) and artificial graphite (G49, manufactured by Zichen) in a 2:8 ratio, 5 parts by mass of carbon black (SuperP, manufactured by MTI Corporation), and CMC (CELLOGEN BSH-6, manufactured by DKS Co. Ltd.) in such an amount that the solid content was 1.67 parts by mass as the thickener were placed, followed by mixing using a planetary centrifugal mixer (ARE-310, manufactured by THINKY CORPORATION), to give a composition for nonaqueous electrolyte battery electrodes.

(Comparative Example 11)

In a dedicated container, 51.44 parts by mass of the aqueous PVA binder solution prepared in Example 15, 89.55 parts by mass of a mixture of SiOx (BSO-1, manufactured by BTR) and artificial graphite (G49, manufactured by Zichen) in a 2:8 ratio as the anode active material, 4.975 parts by mass of carbon black (SuperP, manufactured by MTI Corporation) as the conductive agent, and 46.50 parts by mass of ion exchanged water were placed, followed by mixing using a planetary centrifugal mixer (ARE-310, manufactured by THINKY CORPORATION), to give a composition for nonaqueous electrolyte battery electrodes.

[Production of Electrode Material]

The compositions for nonaqueous electrolyte battery electrodes obtained in Examples 1 to 15 and Comparative Examples 1 to 11 each were applied onto a copper foil current collector using a coating machine (manufactured Imoto Machinery Co., Ltd.). After drying with a hot air dryer at 80°C for 30 minutes, and then rolling treatment was performed using a roll press machine (manufactured by Hosen Corp.). Thereafter, the resultant substance was punched out as an anode for lithium-ion secondary batteries ($\varphi$14 mm), and then subjected to secondary drying at 120°C for 3 hours under reduced pressure, producing an anode for lithium-ion secondary batteries.

<Evaluation of Properties of Composition>

[Coatability]

The anode for lithium-ion secondary batteries produced above was visually inspected for the presence or absence of coating defects, such as irregularities, massive dispersion defectives, unevenly distributed fibers, and streaks, of the electrode surface after coating. Those free from the coating defects were evaluated as ∘. The electrode surface is required to be uniform in terms of battery performance, and therefore it was determined that those having the coating defects were not worthy of the battery performance evaluation and that the discharge performance and the expansion rate were not evaluated. Additionally, electrodes not containing fibers were not evaluated for the coatability.

<Evaluation of Electrode>

[Fiber Dispersibility in Electrode Material]

For the electrodes prepared according to the above-described procedure, a hardened copper foil from the current collector was dispersed in water and filtered to extract the fibers. The extracted fibers were inspected for poor dispersion, the presence or absence of adhesion (strips) or masses (entanglement of fibers) of the fibers, and the presence or absence of bends of the fibers. The dispersibility was evaluated as follows: those free from poor dispersion and changes in fiber length were evaluated as 3; those having poor dispersion were evaluated as 2; and those having fiber bends were evaluated as 1.

[Production of Lithium-Ion Secondary Battery]

The anode for lithium-ion secondary batteries obtained according to the above-described procedure was transferred to a glove box (manufactured by Miwa Mfg Co., Ltd.) under an argon gas atmosphere. Metallic lithium foil (thickness of 0.2 mm, $\varphi$16 mm) was used for the cathode, glass nonwoven fabric (TGP-020A) was used for a separator, and one obtained by dissolving lithium hexafluorophosphate ($LiPF_6$) in a mixed solvent of ethylene carbonate (EC), ethyl methyl carbonate (EMC), and dimethyl carbonate (DMC) (EC/EMC/DMC = 1/1/1 volume ratio, vinylene carbonate (VC) = 1% by mass) was used for the electrolyte solution and injected. A coin cell battery (2032 type), which is a lithium-ion secondary battery, was produced with the above-described configuration.

<Evaluation of Battery Performance>

[Discharge Capacity Retention Rate I]

Among the coin cell batteries produced according to the above-described procedure, the batteries containing the anodes formed of the composition for nonaqueous electrolyte battery electrodes obtained in Examples 1 to 6 and Comparative Examples 1 to 5 were subjected to a rate test using a commercially available charge/discharge test system (TOSCAT3100, manufactured by TOYO SYSTEM CO., LTD.). The resistance value when a 0.1 mA current was applied for 3 seconds before the initial charge was defined as the DC resistance. In the charging, a constant current charge of 0.02 C (about 1 mA/cm$^2$) was performed, and further a constant voltage charge of 0 V was performed up to a 0.02 mA current relative to the lithium potential. In the discharging, a constant current discharge of 0.02 C (about 0.5 mA/cm$^2$) relative to the lithium potential was performed up to 1.5 V. The coin cell battery was placed in a 25°C thermostatic chamber and subjected to 10 cycles of the initial charge/discharge under the above-described conditions. In a 10-cycle charge/discharge evaluation, the percentage of the discharge capacity ratio in the 10th cycle to the discharge capacity in the 1st cycle was defined as a discharge capacity retention rate I.

Discharge capacity retention rate I (%) = Discharge capacity in 10th cycle/Discharge capacity in 1st cycle × 100 [Math. 1]

[Discharge Capacity Retention Rate II]

Among the coin cell batteries produced according to the above-described procedure, the batteries containing the anodes formed of the composition for nonaqueous electrolyte battery electrodes obtained in Examples 7 to 15 and Comparative Examples 7 to 11 were subjected to a rate test using a commercially available charge/discharge test system (TOSCAT3100, manufactured by TOYO SYSTEM CO., LTD.). The resistance value when a 0.5 mA current was applied for 3 seconds before the initial charge was defined as the DC resistance. In the charging, a constant current charge of 0.2 C was performed up to 5 mV, and further a constant voltage charge of 5 mV was performed up to a 0.02 mA current relative to the lithium potential. In the discharging, a constant current discharge of 0.2 C relative to the lithium potential was performed up to 1.5 V. The coin cell battery was placed in a 25°C thermostatic chamber and subjected to 1 cycle of the initial charge/discharge under the above-described conditions, and subjected to aging treatment. Thereafter, 10 cycles of charge/discharge were carried out. In a 10-cycle charge/discharge evaluation after the aging, the percentage of the discharge capacity ratio in the 10th cycle to the discharge capacity in the 1st cycle was defined as a discharge capacity retention rate II.

Discharge capacity retention rate II (%) = Discharge capacity in 10th cycle/Discharge capacity in 1st cycle × 100 [Math. 2]

[Expansion Rates I·II]

The coin cell batteries that had undergone the above-described charge/discharge test (rate test) were disassembled, and the expansion rate was calculated from the electrode material thickness before the test and the electrode material thickness after the charge/discharge test according to the following expression.

Expansion rate = (Electrode thickness after test (mm) - Copper foil thickness  (mm))/(Electrode thickness before test - Copper foil thickness (mm)) × 100 [Math. 3]

Tables 1 and 2 show the evaluation results of the compositions for electrodes and the electrodes and the batteries obtained from the compositions for electrodes obtained in Examples and Comparative Examples.

[Table 1]

| | Organic Fibers | | | | | | | | Evaluation | | | | | |
| | Type | Addition amount to active material (Parts by weight) | Fiber volume content ratio (% by volume) | Fiber length (mm) | Fiber diameter (μm) | Aspect ratio | Specific gravity | Binder | Coatability | Fiber dispersibility | Discharge capacity retention rate I (% %) | Discharge capacity retention rate II (%) | Extension rate I (%) | Extension rate II (%) |
|---|---|---|---|---|---|---|---|---|---|---|---|---|---|---|
| Ex.1 | PVA | 0.28 | 0.20 | 2 | 5 | 400 | 1.28 | PVA | ○ | 3 | 91.0 | - | 140.0 | - |
| Ex.15 | PVA | 0.56 | 0.39 | 2 | 5 | 400 | 1.28 | PVA | ○ | 3 | - | 93.3 | - | 131.4 |
| Comp. Ex. 4 | None | - | - | - | - | - | - | PVA | - | - | 68.0 | - | 157.0 | - |
| Comp. Ex. 11 | None | - | - | - | - | - | - | PVA | - | - | - | 89.1 | - | 139.8 |

[Table 2]

| | Type | Organic Fibers | | | | | | Binder | Evaluation | | | | | |
| | | Addition amount to active material | Fiber volume content ratio | Fiber length | Fiber diameter | Aspect ration | Specific gravity | | Coatability | Fiber dispersibility | Discharge capacity retention rate I | Discharge capacity retention rate II | Extension rate I | Extension rate II |
| | | Parts by weight | % by volume | mm | μm | | | | | | % | % | % | % |
| Ex.2 | PVA | 0.28 | 0.20 | 2 | 5 | 400 | 1.28 | SBR | ○ | 3 | 61.0 | - | 152.0 | - |
| Ex.3 | PVA | 0.28 | 0.20 | 9 | 18 | 500 | 1.28 | SBR | ○ | 3 | 50.0 | - | 160.0 | - |
| Ex.4 | PVA | 5.85 | 4.57 | 2 | 5 | 400 | 1.28 | SBR | ○ | 3 | 70.0 | - | 135.0 | - |
| Ex.5 | PVA | 0.01 | 0.01 | 2 | 5 | 400 | 1.28 | SBR | ○ | 3 | 47.0 | - | 170.0 | - |
| Ex.6 | PVA | 0.28 | 0.20 | 2 | 3 | 667 | 1.28 | SBR | ○ | 3 | 65.0 | - | 145.0 | - |
| Ex.7 | PVA | 0.11 | 0.08 | 2 | 5 | 400 | 1.28 | SBR | ○ | 3 | - | 91.0 | - | 137.1 |
| Ex.8 | PVA | 0.28 | 0.20 | 2 | 5 | 400 | 1.28 | SBR | ○ | 3 | - | 91.8 | - | 135.9 |
| Ex.9 | PVA | 0.56 | 0.39 | 2 | 5 | 400 | 1.28 | SBR | ○ | 3 | - | 93.7 | - | 133.1 |
| Ex.10 | PVA | 0.84 | 0.59 | 2 | 5 | 400 | 1.28 | SBR | ○ | 3 | - | 89.8 | - | 138.9 |
| Ex.11 | PVA | 0.56 | 0.39 | 3 | 5 | 600 | 1.28 | SBR | ○ | 3 | - | 90.2 | - | 138.3 |
| Ex.12 | PVA | 0.56 | 0.39 | 3 | 7 | 429 | 1.28 | SBR | ○ | 3 | - | 92.5 | - | 134.9 |
| Ex.13 | PVA | 0.56 | 0.39 | 0.5 | 7 | 71 | 1.28 | SBR | ○ | 3 | - | 91.9 | - | 135.8 |
| Ex.14 | PVA | 0.56 | 0.39 | 3 | 7 | 429 | 1.28 | SBR | ○ | 3 | - | 91.5 | - | 135.4 |
| Comp. Ex.1 | PVA | 0.28 | 0.20 | 12 | 5 | 2400 | 1.28 | SBR | Presence of dispersion defectives | 2 | Not carried out | - | Not carried out | - |
| Comp. Ex.2 | PP | 0.28 | 0.20 | 3 | 7 | 429 | 0.91 | SBR | Presence of unevenly distributed fibers | 3 | Not carried out | - | Not carried out | - |

(continued)

| | | Organic Fibers | | | | | | Binder | | Evaluation | | | | | |
|---|---|---|---|---|---|---|---|---|---|---|---|---|---|---|---|
| | Type | Addition amount to active material | Fiber volume content ratio | Fiber length | Fiber diameter | Aspect ration | Specific gravity | Binder | Coatability | Fiber dispersibility | Discharge capacity retention rate I | Discharge capacity retention rate II | Extension rate I | Extension rate II |
| | | Parts by weight | % by volume | mm | μm | | | | | | % | % | % | % |
| Comp. Ex.3 | GF | 0.28 | 0.20 | 3 | 6.5 | 462 | 2.5 | SBR | ○ | 1 | 41.0 | - | 179.0 | - |
| Comp. Ex.5 | None | - | - | - | - | - | - | SBR | - | - | 40.0 | - | 181.0 | - |
| Comp. Ex.6 | PP | 0.20 | 0.20 | 3 | 7 | 429 | 0.91 | SBR | Presence of dispersion defectives | 2 | - | Not carried out | - | Not carried out |
| Comp. Ex.7 | PP | 0.40 | 0.39 | 3 | 7 | 429 | 0.91 | SBR | Presence of dispersion defectives | 2 | - | Not carried out | - | Not carried out |
| Comp. Ex.8 | GF | 1.10 | 0.39 | 3 | 6.5 | 462 | 2.5 | SBR | Presence of streaks | 1 | - | Not carried out | - | Not carried out |
| Comp. Ex.9 | CNF | 0.66 | 0.39 | 0.01 | 0.003 | 3333 | 1.5 | SBR | ○ | 2 | - | 87.4 | - | 143.1 |
| Comp Ex.10 | None | - | - | - | - | - | - | SBR | - | - | - | 87.6 | - | 142.5 |

The results in Tables 1 and 2 showed that, when the same binder was used, the inclusion of the specific fibers reduced the expansion rate and improved the capacity retention rate.

Comparative Example 1 in which the fibers having a large fiber length were used, Comparative Example 9 in which the fibers having a small fiber length were used, Comparative Examples 2, 6, and 7 in which the fibers having a small specific gravity were used, and Comparative Examples 3 and 8 in which the inorganic fibers were used all did not exhibit the advantageous effects of the present invention.

**Claims**

1. A composition for nonaqueous electrolyte battery electrodes comprising:

   a binder; and
   an organic fiber,
   wherein the organic fiber has a specific gravity of 1.00 or more and a fiber length of 0.1 mm or more and 10 mm or less.

2. The composition according to claim 1, wherein the organic fiber has an SP value of 10 $(cal/cm^3)^{1/2}$ or more and 16 $(cal/cm^3)^{1/2}$ or less.

3. The composition according to claim 1 or 2, wherein the organic fiber has a fiber diameter of 1 $\mu$m or more and 30 $\mu$m or less.

4. The composition according to claim 1 or 2, wherein the organic fiber comprises at least one selected from the group consisting of a polyvinyl alcohol-based fiber, a polyester-based fiber, an ethylene-vinyl alcohol-based copolymer fiber, a polyamide-based fiber, and a polyimide-based fiber.

5. The composition according to claim 1 or 2, wherein the binder comprises at least one selected from the group consisting of a synthetic resin-based binder, a natural resin-based binder, a semisynthetic resin-based binder, a silicate-based binder, a phosphate-based binder, a sol-based binder, and a cement-based binder.

6. The composition according to claim 1 or 2 further comprising an active material.

7. The composition according to claim 6, wherein a content of the organic fiber is 0.01 parts by mass or more and 10 parts by mass or less based on 100 parts by mass of the active material.

8. An additive for nonaqueous electrolyte battery electrodes comprising an organic fiber,
   wherein the organic fiber has a specific gravity of 1.00 or more and a fiber length of 0.1 mm or more and 10 mm or less.

9. The additive according to claim 8, wherein the organic fiber has an SP value of 10 $(cal/cm^3)^{1/2}$ or more and 16 $(cal/cm^3)^{1/2}$ or less.

10. The additive according to claim 8 or 9, wherein the organic fiber has a fiber diameter of 1 $\mu$m or more and 30 $\mu$m or less.

## INTERNATIONAL SEARCH REPORT

| International application No. |
| --- |
| **PCT/JP2023/047108** |

| A. | CLASSIFICATION OF SUBJECT MATTER |
| --- | --- |

*H01M 4/62*(2006.01)i; *H01M 4/13*(2010.01)i
FI:   H01M4/62 Z; H01M4/13

According to International Patent Classification (IPC) or to both national classification and IPC

| B. | FIELDS SEARCHED |
| --- | --- |

Minimum documentation searched (classification system followed by classification symbols)

H01M4/62; H01M4/13

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2018/135353 A1 (DAICEL CORP.) 26 July 2018 (2018-07-26) paragraphs [0032]-[0103], [0106]-[0109], [0129] | 1-3, 5-10 |
| A | entire text | 4 |
| X | JP 2020-57519 A (JSR CORPORATION) 09 April 2020 (2020-04-09) paragraphs [0010]-[0049], [0080] | 1-10 |
| P, X | JP 2023-113492 A (FDK CORP.) 16 August 2023 (2023-08-16) paragraphs [0016]-[0035], [0054]-[0055], fig. 2 | 1-10 |
| A | JP 2021-102793 A (THE FURUKAWA ELECTRIC CO., LTD.) 15 July 2021 (2021-07-15) paragraph [0050] | 1-10 |
| A | JP 2021-134263 A (NIPPON PAPER INDUSTRIES CO., LTD.) 13 September 2021 (2021-09-13) paragraph [0078] | 2-7, 9-10 |

☑ Further documents are listed in the continuation of Box C.    ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **05 March 2024** | **26 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2023/047108** |

**C.    DOCUMENTS CONSIDERED TO BE RELEVANT**

| Category* | Citation of document, with indication, where appropriate, of the relevant passages | Relevant to claim No. |
|---|---|---|
| A | 清造剛, 繊維の密度, 繊維工学, 1968, vol. 21, no. 7, pp. 458-463, table 1, (KIYOTSUKURI, Tsuyoshi, The Determination of Fiber Density, Journal of the Textile Machinery of Japan - Proceedings)<br>table 1 | 1-10 |
| A | 福本修, ポリアミド樹脂ハンドブック, 初版, 日刊工業新聞社, 30 January 1988, p. 375, (FUKUMOTO, Osamu, THE NIKKAN KOGYO SHIMBUN, LTD.), non-official translation (Handbook of polyamide resins, first edition)<br>table 10.2 | 2-7, 9-10 |

Form PCT/ISA/210 (second sheet) (July 2022)

**INTERNATIONAL SEARCH REPORT**
Information on patent family members

International application No.

**PCT/JP2023/047108**

| Patent document cited in search report | | | Publication date (day/month/year) | Patent family member(s) | | | Publication date (day/month/year) |
|---|---|---|---|---|---|---|---|
| WO | 2018/135353 | A1 | 26 July 2018 | US 2019/0334175 A1 paragraphs [0034]-[0113], [0124]-[0126], [0151] EP 3573153 A1 CN 110192296 A KR 10-2019-0101475 A | | | |
| JP | 2020-57519 | A | 09 April 2020 | (Family: none) | | | |
| JP | 2023-113492 | A | 16 August 2023 | (Family: none) | | | |
| JP | 2021-102793 | A | 15 July 2021 | (Family: none) | | | |
| JP | 2021-134263 | A | 13 September 2021 | (Family: none) | | | |

Form PCT/ISA/210 (patent family annex) (July 2022)

**REFERENCES CITED IN THE DESCRIPTION**

**Patent documents cited in the description**

- JP 2022211922 A
- JP 2019186164 A

- JP 2020129479 A

**Non-patent literature cited in the description**

- Polymer Hand Book. Wiley-Interscience, 1999